(19) Europäisches Patentamt
European Patent Office
Office européen des brevets

(11) **EP 2 739 944 B1**

(12) **EUROPÄISCHE PATENTSCHRIFT**

(45) Veröffentlichungstag und Bekanntmachung des Hinweises auf die Patenterteilung:
**01.11.2023 Patentblatt 2023/44**

(21) Anmeldenummer: **12742830.8**

(22) Anmeldetag: **17.07.2012**

(51) Internationale Patentklassifikation (IPC):
$G01F\ 25/10^{(2022.01)}$ $G01F\ 15/02^{(2006.01)}$
$G01F\ 1/84^{(2006.01)}$ $G01B\ 21/08^{(2006.01)}$
$G01N\ 3/56^{(2006.01)}$ $G01N\ 17/00^{(2006.01)}$

(52) Gemeinsame Patentklassifikation (CPC):
**G01B 21/085; G01F 1/8409; G01F 1/8436; G01F 1/8477; G01F 15/02; G01F 25/10; G01N 3/56; G01N 17/008**

(86) Internationale Anmeldenummer:
**PCT/EP2012/064011**

(87) Internationale Veröffentlichungsnummer:
**WO 2013/017405 (07.02.2013 Gazette 2013/06)**

(54) **VERFAHREN ZUM DETEKTIEREN EINER BELAGSBILDUNG ODER EINER ABRASION IN EINEM DURCHFLUSSMESSGERÄT**

METHOD FOR DETECTING A DEPOSIT FORMATION OR AN ABRASION IN A FLOW METER

PROCÉDÉ DE DÉTECTION D'UN DÉPÔT OU D'UNE ABRASION DANS UN DÉBITMÈTRE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **04.08.2011 DE 102011080415**

(43) Veröffentlichungstag der Anmeldung:
**11.06.2014 Patentblatt 2014/24**

(73) Patentinhaber: **Endress+Hauser Flowtec AG 4153 Reinach (CH)**

(72) Erfinder:
• **RIEDER, Alfred**
 **84032 Landshut (DE)**
• **DRAHM, Wolfgang**
 **85435 Erding (DE)**
• **ZHU, Hao**
 **85354 Freising (DE)**
• **HUBER, Christof**
 **CH-3007 Bern (CH)**
• **KUMAR, Vivek**
 **CH-4123 Allschwil (CH)**
• **KIRST, Michael**
 **79539 Lörrach (DE)**

(74) Vertreter: **Hahn, Christian et al Endress+Hauser Group Services (Deutschland)AG +Co. KG Colmarer Straße 6 79576 Weil am Rhein (DE)**

(56) Entgegenhaltungen:
EP-A1- 2 614 338 WO-A1-2009/051588
WO-A1-2009/134268 WO-A1-2010/087724
FR-A1- 2 266 869 FR-A1- 2 754 898
US-A- 5 248 198

EP 2 739 944 B1

**Beschreibung**

Die vorliegende Erfindung betrifft ein Verfahren zum Detektieren einer Belagsbildung oder einer Abrasion an einem ersten Messrohr eines von Medium durchströmten Durchflussmessgerätes sowie ein entsprechend ausgebildetes Durchflussmessgerät.

Durchflussmessgeräte, wie beispielsweise Wirbelströmungsmessgeräte und Coriolis-Durchflussmessgeräte weisen in der Regel mindestens ein Messrohr auf. Coriolis-Durchflussmessgeräte können dabei auch zwei oder mehrere (beispielsweise vier) fluidtechnisch parallel zueinander ausgebildete Messrohre aufweisen. Je nach Anwendung besteht dabei das Problem, dass an den Messrohren von Durchflussmessgeräten eine Belagsbildung (insbesondere durch zumindest einen Teil des zu messenden Mediums) oder eine Abrasion (z.B. durch eine Korrosion) an den, das Medium kontaktierenden Flächen der jeweiligen Messrohre auftritt. Insbesondere bei Coriolis-Durchflussmessgeräten wird durch solch eine Belagsbildung oder Abrasion das Schwingungsverhalten des betreffenden Messrohres beeinflusst, was wiederum zu Messfehlern bei der Messung einer physikalischen Messgröße (z.B. Massedurchfluss, Dichte, Viskosität, etc.) führen kann. Ferner sind eine Belagsbildung sowie eine Korrosion an Messrohren auch dann problematisch, wenn eine Verunreingung (z.B. durch Ablösen von Teilen des Belags) des jeweiligen, zu messenden Mediums vermieden werden soll. Dies ist beispielsweise bei lebensmitteltechnischen Anwendungen der Fall. Dementsprechend ist wünschenswert, dass solch eine Belagsbildung und/oder Abrasion eines Messrohres eines Durchflussmessgerätes zuverlässig und einfach feststellbar ist, ohne dass hierzu ein Ausbau des Durchflussmessgerätes oder ein anderweitiger, substantieller Eingriff erforderlich ist. Dabei ist insbesondere die Detektion einer schichtartigen Belagsbildung auf der Innenwand eines Messrohres schwierig zu detektieren, da weiterhin ein Durchfluss durch das betreffende Messrohr ermöglicht wird.

In der Druckschrift WO 2009/134268 A1 ist ein Durchflussmessgerät beschrieben, durch das eine Abweichung in einem Durchflussmessgerät-Parameter detektierbar ist. Solch eine Abweichung eines Durchflussmessgerät-Parameters kann unter anderem durch eine Verstopfung eines Messrohres und/oder durch eine Belagsbildung an einem Messrohr ausgelöst werden. Bei einem beschriebenen Verfahren werden Temperaturmessungen an verschiedenen Positionen des Durchflussmessgerätes, wie beispielsweise einlassseitig und auslassseitig oder alternativ an einem ersten Messrohr und an einem zweiten Messrohr, durchgeführt. Daraus wird ein Temperaturgradient ermittelt. Eine Abweichung in einem Durchflussmessgerät-Parameter wird dann detektiert, wenn der ermittelte Temperaturgradient einen Grenzwert übersteigt. Dem Verfahren liegt die Annahme zu Grunde, dass durch eine Belagsbildung oder Verstopfung der Durchfluss durch das betreffende Messrohr beeinflusst wird, was sich wiederum auf den Temperaturgradienten auswirkt.

Dementsprechend besteht die Aufgabe der vorliegenden Erfindung darin, ein Verfahren und ein Durchflussmessgerät bereitzustellen, durch das eine Belagsbildung und/oder eine Abrasion an einem Messrohr des Durchflussmessgerätes frühzeitig und verlässlich detektierbar ist.

Die Aufgabe wird durch ein Verfahren gemäß Anspruch 1 sowie durch ein Durchflussmessgerät gemäß Anspruch 12 gelöst. Vorteilhafte Weiterbildungen der Erfindung sind in den Unteransprüchen angegeben.

Gemäß der vorliegenden Erfindung wird ein Verfahren zum Detektieren einer Belagsbildung oder einer Abrasion an einem ersten Messrohr eines von Medium durchströmten Durchflussmessgerätes bereitgestellt. Das Verfahren weist dabei nachfolgende Schritte auf:

A) Erfassen eines ersten, zeitlichen Temperaturverlaufs durch einen ersten Temperatursensor, der an dem ersten Messrohr derart angeordnet ist, dass zwischen dem ersten Temperatursensor und dem Medium zumindest eine Messrohrwand des ersten Messrohres ausgebildet ist, und zeitlich paralleles Erfassen eines zweiten, zeitlichen Referenz-Temperaturverlaufs durch einen zweiten, von dem ersten Temperatursensor beabstandeten Temperatursensor, der thermisch an das Medium angekoppelt ist;

B) Bestimmen mindestens einer, für die Wärmeübertragung von dem Medium über die Messrohrwand auf den ersten Temperatursensor charakteristischen Größe aus zumindest dem ersten, zeitlichen Temperaturverlauf und dem zweiten, zeitlichen Referenz-Temperaturverlauf; und

C) Detektieren einer Belagsbildung oder einer Abrasion an dem ersten Messrohr, falls die mindestens eine, bestimmte, charakteristische Größe oder eine daraus abgeleitete Größe um mehr als einen Grenzwert von einer vorbestimmten Referenzgröße abweicht.

Gemäß der vorliegenden Erfindung wird das Prinzip ausgenutzt, dass durch eine Belagsbildung oder durch eine Abrasion an dem ersten Messrohr die Wärmeübertragungseigenschaften von dem Medium über die Messrohrwand des ersten Messrohres (und gegebenenfalls über weitere, zwischen dem Medium und dem ersten Temperatursensor angeordnete Bauteile) auf den ersten Temperatursensor geändert werden. Solche geänderten Wärmeübertragungseigenschaften wiederum führen bei Auftreten einer Temperaturänderung des Mediums zu einer geänderten Temperaturanpassung im Bereich des ersten Messrohres (bzw. des ersten Temperatursensors). Eine Änderung der Wärmeübertragungseigenschaften von dem Medium über die Messrohrwand des ersten Messrohres auf den ersten Temperatursensor kann insbesondere dadurch bestimmt werden, dass bei Auftreten einer Temperaturänderung des Mediums die Temperaturanpassung im Bereich des ersten Messrohres sensorisch erfasst wird und mit einer Temperaturanpassung an einer anderen, beabstandeten Position des Durchflussmessgerätes, die ebenfalls thermisch an das Medium gekoppelt ist, als Referenz verglichen wird. Dies erfolgt gemäß der vorliegenden Erfindung durch Erfassung des ersten, zeitlichen Temperaturverlaufs und des zweiten, zeitlichen Referenz-Temperaturverlaufs als Referenz. Indem der zweite Temperatursensor beabstandet von dem ersten Temperatursensor angeordnet ist und thermisch an das Medium angekoppelt ist, ist bei Auftreten einer Temperaturänderung des Mediums die Temperaturanpassung des zweiten Temperatursensors vollständig oder weitgehend (je nach Positionierung des zweiten Temperatursensors) unabhängig von einer eventuell auftretenden Belagsbildung oder Abrasion an dem ersten Messrohr. Dementsprechend kann gemäß der vorliegenden Erfindung eine gegebenenfalls auftretende Änderung der Wärmeübertragungseigenschaften von dem Medium über die Messrohrwand des ersten Messrohres auf den ersten Temperatursensor gegenüber einem ursprünglichen Ausgangszustand des Durchflussmessgerätes, und damit eine Belagsbildung und/oder Abrasion an dem ersten Messrohr, zuverlässig und auf einfache Weise detektiert werden. Das Verfahren ist relativ kostengünstig realisierbar, da bei Durchflussmessgeräten in der Regel Temperatursensoren vorzusehen sind (insbesondere zur Durchführung einer Temperaturkompensation bei der Bestimmung der jeweiligen, physikalischen Messgröße des Mediums). Ferner kann das erfindungsgemäße Verfahren auch parallel zu einer Durchflussmessung (z.B. zur Bestimmung eines Massedurchflusses, einer Dichte und/oder einer Viskosität des Mediums) und/oder auch bei ruhendem Medium durchgeführt werden.

Die vorliegende Erfindung zeichnet sich dadurch aus, dass eine schichtartige Belagsbildung (und entsprechend auch eine Abrasion) an der Innenwand eines Messrohres detektierbar ist, selbst wenn durch das betreffende Messrohr weiterhin ein unverminderter oder nur leicht reduzierter (bzw. im Falle einer Abrasion ein leicht erhöhter) Strömungsquerschnitt bereitgestellt wird. Durch die vorliegende Erfindung sind aber auch anderweitige Formen einer Belagsbildung detektierbar. Insbesondere ist auch detektierbar, wenn das betreffende Messrohr vollständig verstopft ist, da aufgrund der Verstopfung ebenfalls eine Wärmeübertragung von dem Medium über den verstopften Teil des Mediums und über die Messrohrwand auf den ersten Temperatursensor erheblich von einer Wärmeübertragung in einem Ausgangszustand des Durchflussmessgerätes abweicht.

Als "Durchflussmessgerät" wird in dem vorliegenden Zusammenhang allgemein ein Gerät bezeichnet, durch das mindestens eine physikalische Messgröße (insbesondere ein Massedurchfluss, eine Dichte und/oder eine Viskosität) eines, in einer Rohrleitung strömenden Mediums detektierbar ist. Ein solches Durchflussmessgerät kann beispielsweise durch ein Wirbelströmungsmessgerät oder durch ein Coriolis-Durchflussmessgerät gebildet werden. Das Durchflussmessgerät kann dabei ein Messrohr oder alternativ auch zwei oder mehrere Messrohre aufweisen. Weist es mehrere Messrohre auf, so sind diese insbesondere fluidtechnisch parallel zueinander ausgebildet. Insbesondere weist das Durchflussmessgerät einen Messwandler vom Vibrationstyp auf, der wiederum zumindest das erste Messrohr (und gegebenenfalls auch ein zweites oder mehrere weitere Messrohr(e)) aufweist. Ein Messwandler vom Vibrationstyp dient dabei allgemein dazu, in einem hindurchströmenden Medium mechanische Reaktionskräfte, z.B. massedurchflussabhängige Coriolis-Kräfte, dichteabhängige Trägheitskräfte und/oder viskositätsabhängige Reibungskräfte, zu erzeugen. Diese mechanischen Reaktionskräfte wiederum sind sensorisch erfassbar. Eine typische Betriebsweise solch eines Durchflussmessgerätes wird nachfolgend beschrieben: Es werden sämtliche Messrohre des Messwandlers zu mechanischen Schwingungen durch mindestens einen Erreger angeregt. Hierbei kann insbesondere der Grundmodus der Biegeschwingungen angeregt werden. Ferner werden die mechanischen Schwingungen der Messrohre durch mindestens einen (in der Regel mindestens zwei, entlang der Erstreckungsrichtung der Messrohre beabstandete) Schwingungs-Sensor(en) erfasst. Die von dem mindestens einen Schwingungs-Sensor bereitgestellten Sensorsignale werden durch eine Elektronik des Durchflussmessgerätes ausgewertet. Die Ansteuerung des Erregers erfolgt in der Regel ebenfalls durch die Elektronik.

Das Durchflussmessgerät ist insbesondere als Coriolis-Durchflussmessgerät ausgebildet. Durch ein Coriolis-Durchflussmessgerät ist der Massedurchfluss des Mediums durch das Coriolis-Durchflussmessgerät unter Ausnutzung des Coriolis-Prinzips bestimmbar. Werden die Messrohre nicht von Medium durchströmt, so schwingen sie bei Anregung zu mechanischen Schwingungen (entlang ihrer jeweiligen Erstreckungsrichtung) in Phase. Werden die Messrohre von einem Medium durchströmt (mit einer Strömungsgeschwindigkeit größer als Null), so führt dies dazu, dass die Messrohre aufgrund der auf das strömende Medium wirkenden Coriolis-Kraft zusätzlich verformt werden. Diese, entlang der Messrohre auftretende Phasenverschiebung kann durch den mindestens einen Schwingungs-Sensor erfasst werden. Beispielsweise können mindestens zwei, entlang der Erstreckungsrichtung der Messrohre voneinander beabstandet angeordnete Schwingungs-Sensoren vorgesehen sein. Die Phasenverschiebung ist proportional zu dem Massedurchfluss.

Zusätzlich oder alternativ kann/können durch ein Durchflussmessgerät mit einem Messwandler vom Vibrationstyp auch eine Dichte und/oder eine Viskosität des strömenden Mediums bestimmt werden. Zur Bestimmung der Dichte des Mediums wird das Prinzip ausgenutzt, dass die Resonanzfrequenz (beispielsweise des Grundmodus der Biegeschwingung) von der schwingenden Masse und damit von der Dichte des strömenden Mediums abhängt. Unabhängig davon, welche physikalische Messgröße (Massedurchfluss, Dichte, Viskosität, etc.) durch ein Durchflussgerät gerade tatsächlich bestimmt wird oder allgemein bestimmbar ist, werden solche Durchflussmessgeräte mit einem Messwandler vom Vibrationstyp häufig (und auch in dem vorliegenden Zusammenhang) allgemein als Coriolis-Durchflussmessgeräte bezeichnet. Gemäß einer Weiterbildung wird das Durchflussmessgerät durch solch ein Coriolis-Durchflussmessgerät gebildet. Insbesondere ist/sind durch dieses ein Massedurchfluss, eine Dichte und/oder eine Viskosität des jeweiligen Mediums bestimmbar. Da solche Coriolis-Durchflussmessgeräte häufig zwei oder mehrere Messrohre mit jeweils verengtem Strömungsquerschnitt (relativ zu einer zuführenden und abführenden Rohrleitung) und/oder mindestens ein gekrümmtes Messrohr aufweisen, sind die Messrohre hinsichtlich einer Belagsbildung und Abrasion besonders gefährdet. Wie oberhalb erläutert wird, ist aber an den Messrohren eine Belagsbildung und Abrasion besonders kritisch, so dass das erfindungsgemäße Verfahren besonders bei Coriolis-Durchflussmessgeräten besonders vorteilhaft ist.

Das "Medium" kann vollständig oder auch nur teilweise durch eine Flüssigkeit, ein Gas oder eine Mischung aus Flüssigkeit und Gas gebildet werden. Die Flüssigkeit, das Gas oder die Mischung aus Flüssigkeit und Gas kann insbesondere auch Feststoffteile (beispielsweise pneumatisch geförderter Staub, Feststoffteile in Gas, Feststoffteile in Flüssigkeit, etc.) mitführen. Das Medium muss während der Durchführung des erfindungsgemäßen Detektionsverfahrens nicht zwingend strömen. Vielmehr kann es dabei auch ruhen. Ferner kann auch ein Mediumswechsel stattfinden.

Die Schritte des Erfassens (Schritt A)), des Bestimmens (Schritt B)) und des Detektierens (Schritt C)) werden erfindungsgemäß bei (insbesondere unmittelbar oder zeitlich nach) Auftreten einer (kontinuierlichen oder sprunghaften) Temperaturänderung des Mediums durchgeführt. Die Temperaturänderung wird gemäß einer Weiterbildung nicht von dem Durchflussmessgerät aus induziert. Eine solche, nicht durch das Durchflussmessgerät induzierte Temperaturänderung liegt beispielsweise vor, wenn sich die Temperatur des betreffenden Mediums ändert oder wenn ein Mediumswechsel stattfindet. Eine gut geeignete Konstellation für die Durchführung des erfindungsgemäßen Detektionsverfahren ist beispielsweise, wenn eine Reinigung der jeweiligen Rohrleitung (und damit auch der Rohre des Durchflussmessgerätes) durchgeführt wird, indem die Rohrleitung mit einem Reinigungsmedium (in der Regel heißer Dampf) gespült wird. Solch eine Reinigung wird insbesondere als CIP (engl.: cleaning in process; deutsch: Reinigen im Prozess) bezeichnet. Weiterhin können je nach Einsatzbereich des Durchflussmessgerätes prozessbedingt Temperaturänderungen des Mediums auftreten, die gegebenenfalls auch zu vorbestimmten Zeiten und/oder in vorbestimmter Höhe auftreten. Allgemein und besonders dann, wenn die Temperaturänderung nicht von dem Durchflussmessgerät aus induziert wird, ist bevorzugt, dass über einen Temperatursensor, der von dem Medium kontaktiert wird oder der thermisch möglichst unmittelbar an das Medium angekoppelt ist (z.B. über eines oder mehrere Bauteile), das Auftreten solch einer Temperaturänderung und gegebenenfalls auch deren Höhe erfassbar ist. Dieser Temperatursensor kann durch den oberhalb genannten, zweiten Temperatursensor oder auch durch einen weiteren Temperatursensor (neben dem ersten und dem zweiten Temperatursensor) gebildet werden. Insbesondere wird nach Detektion solch einer Temperaturänderung die Durchführung des erfindungsgemäßen Detektionsverfahrens (beispielsweise durch eine Elektronik des Durchflussmessgerätes) eingeleitet.

Der erste Temperatursensor kann beispielsweise außen an dem ersten Messrohr angeordnet sein, wobei er entweder direkt an dem ersten Messrohr vorgesehen oder über ein weiteres Bauteil an das erste Messrohr thermisch angekoppelt sein kann. Der erste Temperatursensor kann sich auch zum Teil in die Messrohrwand des ersten Messrohres hineinerstrecken (z.B. in eine entsprechende Sackbohrung eingesetzt sein), so dass die Messrohrwand in diesem Bereich etwas dünner als an den umliegenden Bereichen ausgebildet ist.

Allgemein wird angemerkt, dass grundsätzlich auch die Möglichkeit besteht, zusätzlich noch an weiteren Positionen Temperaturverläufe (durch entsprechende Temperatursensoren) zu erfassen, die bei dem Schritt des Bestimmens (Schritt B)) mit ausgewertet werden. Ferner können bei dem Schritt des Bestimmens (Schritt B)) auch noch weitere Einflussfaktoren berücksichtigt werden. Weist das Durchflussmessgerät mehrere Messrohre auf, so ist das erfindungsgemäße Verfahren in entsprechender Weise auch an mehreren Messrohren parallel durchführbar. Falls bei dem Schritt des Bestimmens (Schritt B)) mehrere, für die Wärmeübertragung charakteristische Größen bestimmt werden, kann vorgesehen sein, dass bereits bei Abweichung von einer (einzigen) Größe um mehr als einen (zugehörigen) Grenzwert von einer vorbestimmten (zugehörigen) Referenzgröße eine Belagsbildung oder eine Abrasion detektiert wird. Alternativ kann aber auch vorgesehen sein, dass erst dann eine Belagsbildung oder Abrasion detektiert wird, wenn zwei oder mehrere Größen um einen (jeweils zugehörigen) Grenzwert von einer (jeweils zugehörigen) Referenzgröße abweichen und/oder wenn eine, aus einer mathematischen Verknüpfung der bestimmten, für die Wärmeübertragung charakteristischen Größen erhaltene, abgeleitete Größe um mehr als einen Grenzwert von einer vorbestimmten Referenzgröße abweicht.

Gemäß einer Weiterbildung werden das erfindungsgemäße Verfahren und auch die weiteren Schritte gemäß der nachfolgend erläuterten Weiterbildungen und Varianten jeweils intern in dem Durchflussmessgerät ausgeführt. Erfindungsgemäß ist eine Elektronik des Durchflussmessgerätes zur Ausführung der jeweiligen Schritte ausgebildet. In dem Zusammenhang der vorliegenden Erfindung wird teilweise erwähnt, dass "mindestens ein" Bauteil vorgesehen ist. Bei diesen Bauteilen wird auch bei den weiteren Ausführungen auf die Möglichkeit der Vorsehung von mehreren Bauteilen (neben der Möglichkeit von genau einem Bauteil) Bezug genommen, auch wenn dies nicht jedesmal explizit erwähnt wird.

Gemäß einer nichterfindungsgemäßen Weiterbildung ist der zweite Temperatursensor in direktem Kontakt mit dem Medium angeordnet. Auf diese Weise kann eine, in dem Medium auftretende Temperaturänderung unmittelbar erfasst werden, so dass eine Beeinflussung dieser Temperaturerfassung durch weitere Einflussfaktoren weitestgehend eliminiert ist. Insbesondere bleibt die thermische Ankopplung des zweiten Temperatursensors an das Medium zeitlich invariant. Insbesondere ragt der zweite Temperatursensor in den Strömungspfad des Mediums hinein.

Gemäß der beanspruchten Erfindung ist zwischen dem zweiten Temperatursensor und dem Medium zumindest ein, von dem Medium kontaktiertes, zweites Bauteil vorgesehen. Über das zweite Bauteil erfolgt folglich eine thermische Ankopplung des zweiten Temperatursensors an das Medium. Grundsätzlich können zwischen dem zweiten Temperatursensor und dem Medium auch mehrere Bauteile vorgesehen sein. Um eine von weiteren Einflussfaktoren möglichst unbeeinflusste, mittelbare Temperaturerfassung des Mediums (mittelbar über das zweite Bauteil und gegebenenfalls über weitere Bauteile) zu erzielen, ist auch bei einer Weiterbildung bevorzugt, dass der zweite Temperatursensor thermisch möglichst unmittelbar (d.h. ausschließlich über das zweite Bauteil oder alternativ über möglichst wenige Bauteile) an das Medium angekoppelt ist. Das zweite Bauteil bildet insbesondere ein Bauteil des Durchflussmessgerätes und ist insbesondere separat von dem ersten Messrohr ausgebildet. Indem das zweite Bauteil separat von dem ersten Messrohr ausgebildet ist, wird davon ausgegangen, dass an diesem eine Belagsbildung oder Abrasion nicht oder nicht in gleichem Maße (im Hinblick auf dessen Wärmeübertragungseigenschaften von dem Medium auf den zweiten Temperatursensor) wie an dem ersten Messrohr auftritt. Gemäß einer Weiterbildung wird das zweite Bauteil durch ein stromaufwärts von dem ersten Messrohr ausgebildetes Bauteil des Durchflussmessgerätes gebildet. Dadurch ist das Auftreten einer Temperaturänderung des Mediums durch den zweiten Temperatursensor frühzeitig detektierbar.

Gemäß einer Weiterbildung ist das zweite Bauteil im Wesentlichen invariant (bzw. gleichbleibend) im Hinblick auf eine Belagsbildung und eine Abrasion durch das Medium. Auf diese Weise wird in dem Bereich des zweiten Temperatursensors eine, im Hinblick auf die Wärmeübertragungseigenschaften von dem Medium auf den zweiten Temperatursensor gleichbleibende oder zumindest weitgehend gleichbleibende Referenz bereitgestellt. Insbesondere ist die thermische Ankopplung des zweiten Temperatursensors an das Medium invariant oder zumindest weitgehend invariant. Dies ist im Hinblick auf eine zuverlässige Detektion einer Belagsbildung oder einer Abrasion an dem ersten Messrohr besonders vorteilhaft. Unter "im Wesentlichen invariant" wird dabei verstanden, dass eine Belagsbildung und/oder Abrasion entweder überhaupt nicht stattfindet oder aber nur in deutlich geringerem Ausmaß wie bei dem ersten Messrohr. Beispielsweise kann das zweite Bauteil durch einen einlassseitigen Strömungsteiler gebildet werden, der im Hinblick auf eine Belagsbildung und/oder Abrasion deutlich weniger gefährdet ist als die (in der Regel zwei oder mehrere) Messrohre.

Zwar ist die Bereitstellung einer zumindest weitgehend gleichbleibenden Referenz im Hinblick auf die Zuverlässigkeit einer Belags- und/oder Abrasionsdetektion an dem ersten Messrohr bevorzugt. Grundsätzlich können die oberhalb erläuterten Vorteile zumindest im Wesentlichen auch dann erzielt werden, wenn das zweite Bauteil nicht invariant im Hinblick auf eine Belagsbildung oder Abrasion ist, sofern an dem zweiten Bauteil eine Belagsbildung oder Abrasion nicht in dem gleichen Ausmaß (im Hinblick auf die Wärmeübertragungseigenschaften auf den zweiten Temperatursensor) wie bei dem ersten Messrohr auftritt. Gemäß einer Weiterbildung wird das zweite Bauteil durch ein zweites Messrohr des Durchflussmessgerätes, das fluidtechnisch parallel zu dem ersten Messrohr ausgebildet ist, gebildet. Auf diese Weise können die an dem ersten und an dem zweiten Messrohr erfassten, zeitlichen Temperaturverläufe gemäß dem erfindungsgemäßen Verfahren miteinander verglichen werden.

Gemäß einer Weiterbildung wird das Durchflussmessgerät durch ein Coriolis-Durchflussmessgerät gebildet. Insbesondere weist das Verfahren nachfolgenden Schritt auf, der beispielsweise im Rahmen der Erfassung einer physikalischen Messgröße des Mediums durchgeführt wird:

D) Anregen des ersten Messrohres zu mechanischen Schwingungen.

Falls das Durchflussmessgerät zwei oder mehrere Messrohre aufweist, werden insbesondere sämtlichen Messrohre zu mechanischen Schwingungen angeregt.

Gemäß einer Weiterbildung weist das Verfahren nachfolgenden Schritt auf:

E) Ändern einer Temperatur des Mediums.

Gemäß einer Weiterbildung wird die Änderung der Temperatur des Mediums insbesondere aktiv über das Durchflussmessgerät induziert. Dies erfolgt insbesondere durch Heizen des Mediums in einem stromaufwärts von dem ersten und dem zweiten Temperatursensor angeordneten Abschnitt des Durchflussmessgerätes oder durch Kühlen des Mediums in einem stromaufwärts von dem ersten und dem zweiten Temperatursensor angeordneten Abschnitt des Durchflussmessgerätes. Auf diese Weise ist gezielt eine Temperaturänderung zur Durchführung des Detektionsverfahrens erzeugbar. Das Heizen erfolgt insbesondere durch mindestens ein Heizelement. Das Kühlen erfolgt insbesondere durch mindestens ein Kühlelement. Dabei ragt/ragen das Heizelement und/oder das Kühlelement vorzugsweise in den Strömungspfad des Mediums hinein, so dass eine gezielte und definierte Wärmeübertragung auf das bzw. von dem Medium realisierbar ist. Alternativ ist grundsätzlich aber auch möglich, dass das Heizen bzw. Kühlen des Mediums nur mittelbar, insbesondere über eines oder mehrere Bauteile (z.B. ein Messrohr, ein Rohr-Anschlussstück, etc.), erfolgt. Das Heizelement und/oder das Kühlelement ist/sind insbesondere stromaufwärts von einer gegebenenfalls vorhandenen Aufzweigung des Strömungspfades auf zwei oder mehrere Messrohre angeordnet. Gemäß einer Weiterbildung wird die Durchführung eines Heizzyklus und/oder eines Kühlzyklus durch eine Elektronik des Durchflussmessgerätes gesteuert. Parallel dazu oder zeitlich (unmittelbar) anschließend kann durch die Elektronik die Durchführung zumindest der Schritte des Erfassens (Schritt A)), des Bestimmens (Schritt B)) und des Detektierens (Schritt C)) gesteuert werden.

Gemäß einer Weiterbildung wird die mindestens eine, für die Wärmeübertragung charakteristische Größe aus der Ableitung nach der Zeit (d.h. d/dt) des ersten, zeitlichen Temperaturverlaufs und (der Ableitung nach der Zeit) des zweiten, zeitlichen Referenz-Temperaturverlaufs bestimmt. Gemäß einer weiteren Weiterbildung wird die mindestens eine, für die Wärmeübertragung charakteristische Größe aus der Ableitung nach der Zeit (d.h. d/dt) eines durch eine vorbestimmte, mathematische Verknüpfung des ersten, zeitlichen Temperaturverlaufs und des zweiten, zeitlichen Referenz-Temperaturverlaufs erhaltenen Verlaufs bestimmt. Durch die Bildung der Ableitung nach der Zeit kann die Temperaturanpassung ausgewertet werden. Bereits nach Messung relativ kurzer Zeitintervalle kann aus dem jeweiligen Temperaturverlauf dessen Steigung bzw. Steigungsverlauf ausgewertet werden und daraus können wiederum Rückschlüsse auf die Temperaturanpassung gezogen werden. Insbesondere wird jeweils der aus der Ableitung nach der Zeit erhaltene Verlauf ausgewertet. Beispielsweise kann eine Belagsbildung oder Abrasion jeweils dann detektiert werden, wenn der nach der Ableitung nach der Zeit erhaltene Verlauf um mehr als einen Grenzwert von einem Referenzverlauf abweicht. Alternativ ist aber auch möglich, dass zunächst der erste, zeitliche Temperaturverlauf sowie der zweite, zeitliche Referenz-Temperaturverlauf und/oder der aus der mathematischen Verknüpfung erhaltene Verlauf durch eine entsprechende Approximations-Funktion approximiert wird, wie dies nachfolgend in Bezug auf eine Weiterbildung erläutert wird, und anschließend die Ableitung nach der Zeit von dieser Approximations-Funktion bzw. diesen Approximations-Funktionen gebildet und ausgewertet wird. Weiterhin sind neben den oberhalb erläuterten Weiterbildungen und Varianten auch mathematisch gleichwertige Operationen möglich.

Gemäß einer Weiterbildung werden bei dem Schritt des Bestimmens (Schritt B)) der erste, zeitliche Temperaturverlauf und der zweite, zeitliche Referenz-Temperaturverlauf miteinander gemäß einer vorbestimmten, mathematischen Verknüpfung verknüpft, der daraus erhaltene Verlauf wird mit einer vorbestimmten, mathematischen Approximations-Funktion durch Anpassen entsprechender Parameter der Approximations-Funktion approximiert und die mindestens eine, für die Wärmeübertragung charakteristische Größe wird durch mindestens einen Parameterwert der ermittelten Approximations-Funktion gebildet. Durch den mindestens einen Parameterwert wird der Verlauf der Approximations-Funktion und damit auch der Verlauf, der aufgrund der mathematischen Verknüpfung erhalten wird, charakterisiert bzw. zumindest teilweise bestimmt. Dementsprechend ist der mindestens eine Parameterwert eine für die Wärmeübertragung von dem Medium über die Messrohrwand auf den ersten Temperatursensor charakteristische Größe. Die vorbestimmte, mathematische Verknüpfung wird allgemein durch eine mathematische Operation, die auf den ersten, zeitlichen Temperaturverlauf und auf den zweiten, zeitlichen Referenz-Temperaturverlauf angewendet wird, gebildet. Dabei sind grundsätzlich verschiedene, mathematische Verknüpfungen möglich. Gemäß einer Weiterbildung wird die vorbestimmte, mathematische Verknüpfung durch eine Division des ersten, zeitlichen Temperaturverlaufs durch den zweiten, zeitlichen Referenz-Temperaturverlauf gebildet. Als alternative Variante ist beispielsweise eine Differenzbildung zwischen dem ersten, zeitlichen Temperaturverlauf und dem zweiten, zeitlichen Referenz-Temperaturverlauf möglich. Unter einer "vorbestimmten, mathematischen Approximations-Funktion" wird eine Funktion mit vorbestimmtem Aufbau bzw. vorbestimmter Gestalt verstanden, wobei deren Parameterwerte im Rahmen der Approximation anzupassen sind. Weiterhin sind neben den oberhalb erläuterten Weiterbildungen und Varianten auch mathematisch gleichwertige Operationen möglich. Insbesondere können auch zunächst der erste, zeitliche Temperaturverlauf und der zweite, zeitliche Referenz-Temperaturverlauf jeweils durch eine Approximations-Funktion angenähert werden und es kann erst anschließend eine mathematische Verknüpfung der beiden, erhaltenen Approximations-Funktionen oder auch von einzelnen oder allen Parametern derselben erfolgen.

Gemäß einer Weiterbildung wird die vorbestimmte, mathematische Approximations-Funktion durch die Funktion

$$ae^{-\frac{t}{\tau}}$$

gebildet wird, wobei a und $\tau$ Parameter sind und t die Zeit ist. Dabei wird der Parameter a auch als Verstärkungsfaktor und der Parameter τ auch als Zeitkonstante bezeichnet. Die Funktion kann aber auch noch weitere Parameter aufweisen, wie dies beispielsweise bei der nachfolgenden Funktion der Fall ist:

$$ae^{\frac{t}{\tau}+c} + d \, .$$

Gemäß einer Weiterbildung wird die mindestens eine, bestimmte, für die Wärmeübertragung charakteristische Größe durch den Parameterwert der Zeitkonstante der Approximations-Funktion gebildet. Die Zeitkonstante ist dabei allgemein der mindestens eine Parameter der Approximations-Funktion, der die zeitliche Änderung der Approximations-Funktion beschreibt. Die Zeitkonstante kann insbesondere aus der Ableitung der Approximations-Funktion nach der Zeit bestimmt werden. Wird die vorbestimmte, mathematische Verknüpfung durch eine Division des ersten, zeitlichen Temperaturverlaufs durch den zweiten, zeitlichen Referenz-Temperaturverlauf gebildet und wird der dadurch erhaltene Verlauf durch eine Approximations-Funktion der Gestalt

$$ae^{\frac{t}{\tau}}$$

approximiert, so ist die Zeitkonstante τ insbesondere ein Maß für die Temperaturanpassung im Bereich des ersten Messrohres relativ zu der Referenz. Dementsprechend kann auf diese Weise zuverlässig eine Belagsbildung oder eine Abrasion an dem ersten Messrohr detektiert werden. Die für die Wärmeübertragung charakteristische Größe kann allgemein aber auch durch die Zeitkonstante einer Approximations-Funktion einer abweichenden Gestalt gebildet werden.

Die vorliegende Erfindung betrifft ferner ein Durchflussmessgerät, durch das mindestens eine physikalische Messgröße eines in einer Rohrleitung strömenden Mediums, insbesondere ein Massedurchfluss, eine Dichte und/oder eine Viskosität des Mediums, bestimmbar ist. Das Durchflussmessgerät weist dabei mindestens ein erstes Messrohr, durch das ein Strömungspfad für zumindest einen Teil des jeweiligen (in der Rohrleitung strömenden) Mediums verläuft, auf. Ferner weist es mindestens einen ersten Temperatursensor, der derart an dem ersten Messrohr angeordnet ist, dass zwischen dem ersten Temperatursensor und einem, innerhalb des ersten Messrohres verlaufenden Strömungspfad zumindest eine Messrohrwand des ersten Messrohres ausgebildet ist, mindestens einen zweiten Temperatursensor, der von dem ersten Temperatursensor beabstandet ist und thermisch an einen, innerhalb des Durchflussmessgerätes verlaufenden Abschnitt des Strömungspfades angekoppelt ist, und eine Elektronik auf. Dabei ist durch die Elektronik im Einsatz des Durchflussmessgerätes (insbesondere bei Auftreten einer Temperaturänderung des jeweiligen Mediums) aus zumindest einem von dem ersten Temperatursensor erfassten, ersten, zeitlichen Temperaturverlauf und einem zeitlich parallel von dem zweiten Temperatursensor erfassten, zweiten, zeitlichen Referenz-Temperaturverlauf mindestens eine, für die Wärmeübertragung von dem jeweiligen Medium über die Messrohrwand auf den ersten Temperatursensor charakteristische Größe bestimmbar. Ferner ist durch die Elektronik eine Belagsbildung oder eine Abrasion an dem ersten Messrohr detektierbar, falls die mindestens eine, bestimmte, charakteristische Größe oder eine daraus abgeleitete Größe um mehr als einen Grenzwert von einer vorbestimmten Referenzgröße abweicht. Erfindungsgemäß ist das Durchflussmessgerät eingerichtet, ein Verfahren gemäß einem der Ansprüche 1 bis 11 auszuführen.

Durch das erfindungsgemäße Durchflussmessgerät werden im Wesentlichen die oberhalb, in Bezug auf das erfindungsgemäße Verfahren erläuterten Vorteile erzielt. Ferner sind die gleichen Weiterbildungen und Varianten, die oberhalb in Bezug auf das erfindungsgemäße Verfahren erläutert wurden, in entsprechender Weise realisierbar. Insbesondere werden die oberhalb erläuterten Schritte durch eine entsprechend ausgebildete Elektronik des Durchflussmessgerätes ausgeführt, soweit dies technisch sinnvoll ist. Die Elektronik des Durchflussmessgerätes kann analog und/oder digital arbeiten.

Weitere Vorteile und Zweckmäßigkeiten der Erfindung ergeben sich anhand der nachfolgenden Beschreibung einer Ausführungsform unter Bezugnahme auf die beigefügten Figuren. Von den Figuren zeigen:

Fig. 1: eine schematische Darstellung eines Durchflussmessgerätes in perspektivischer Ansicht mit teilweise abgenommenem Gehäuse zur Veranschaulichung einer Ausführungsform der vorliegenden Erfindung;

Fig. 2: eine Seitenansicht des in Fig. 1 dargestellten Durchflussmessgerätes mit teilweise abgenommenem Gehäuse;

Fig. 3A: eine schematische Darstellung im Hinblick auf die Temperaturerfassung durch den ersten und den zweiten Temperatursensor in einem Ausgangszustand; und

Fig. 3B: eine Fig. 3A entsprechende, schematische Darstellung mit einer Belagsbildung im Bereich des ersten Messrohres.

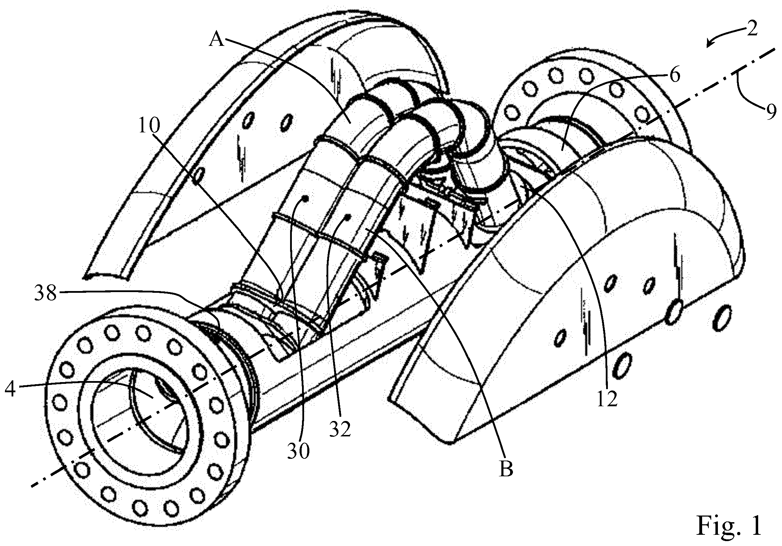

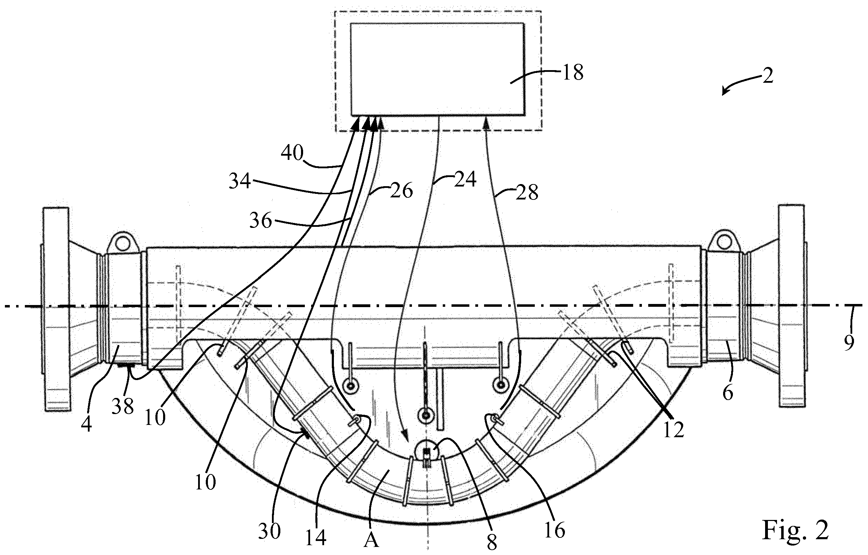

In den Figuren 1 und 2 ist beispielhaft ein Durchflussmessgerät 2 dargestellt, das zur Durchführung des erfindungsgemäßen Detektionsverfahrens ausgebildet ist. Das Durchflussmessgerät 2 weist zwei schwingungsfähig gehaltene Messrohre A und B auf, die jeweils bogenförmig ausgebildet sind und parallel zueinander verlaufen. Das Durchflussmessgerät 2 ist dabei derart in eine (nicht dargestellte) Rohrleitung einsetzbar, dass die beiden Messrohre A und B von dem in der Rohrleitung strömenden Medium parallel durchströmt werden. Hierzu weist das Durchflussmessgerät 2 eingangsseitig einen Strömungsteiler 4 auf, durch den das Medium auf die beiden Messrohre A und B aufgeteilt wird. Ausgangsseitig ist in entsprechender Weise ein Strömungsteiler 6 vorgesehen, durch den das aus den beiden Messrohren A und B austretende Medium wieder zusammengeführt und zu einem Auslass des Coriolis-Durchflussmessgerätes 2 geleitet wird.

Zwischen den beiden Messrohren A und B erstreckt sich ein Erreger 8, der in dem vorliegenden Ausführungsbeispiel durch einen elektrodynamischen Erreger 8 gebildet wird. Der Erreger 8 ist bei dem vorliegenden Ausführungsbeispiel an einem Umkehrpunkt des Bogens, der jeweils durch die beiden Messrohre A und B gebildet wird, angeordnet. Der Erreger 8 ist derart ausgebildet, dass durch Anlegen einer elektrischen Anregungsspannung seine Länge verändert wird. Durch Anlegen einer entsprechenden, periodischen elektrischen Anregungsspannung an den Erreger 8 können die beiden Messrohre A und B periodisch auseinandergedrückt und/oder zusammengezogen werden, so dass sie Biegeschwingungen ausführen. Dabei werden die beiden Messrohre A und B gegenphasig zueinander angeregt und führen jeweils eine (zueinander gegenphasige) Schwenkbewegung um eine Längsachse 9 des Durchflussmessgerätes 2 aus. Die beiden Messrohre A und B sind ferner eingangsseitig und ausgangsseitig durch entsprechende Koppelelemente 10, 12 mechanisch aneinander gekoppelt.

Zwischen den beiden Messrohren A und B, jeweils an einem eingangsseitigen und an einem ausgangsseitigen Abschnitt derselben, erstrecken sich zwei Schwingungs-Sensoren 14, 16, über deren Längenänderung mechanische Schwingungen der beiden Messrohre A und B erfassbar sind. In dem vorliegenden Ausführungsbeispiel ist durch die beiden Schwingungs-Sensoren 14, 16 jeweils die Abstandsänderung zwischen den beiden Messrohren A, B, d.h. deren kombinierte Amplitude, erfassbar. Die Schwingungs-Sensoren 14, 16 werden beispielsweise durch elektrodynamische Schwingungs-Sensoren gebildet. Die Auswertung der von den Schwingungs-Sensoren 14, 16 bereitgestellten Sensorsignale (bzw. Messsignale) sowie die Ansteuerung des Erregers 8 erfolgt durch eine entsprechend ausgebildete Elektronik 18, die lediglich in Fig. 2 schematisch durch eine Box dargestellt ist. Die Ansteuerung des Erregers 8 durch die Elektronik 18 ist in Fig. 2 schematisch durch den Pfeil 24 dargestellt, während die Bereitstellung der Sensorsignale durch die Schwingungs-Sensoren 14, 16 an die Elektronik 18 in Fig. 2 schematisch durch die Pfeile 26, 28 dargestellt ist.

Das Durchflussmessgerät 2 wird vorliegend durch ein Coriolis-Durchflussmessgerät gebildet. Dementsprechend ist durch das Durchflussmessgerät 2 ein Massedurchfluss des in der jeweiligen Rohrleitung strömenden Mediums bestimmbar. Hierzu wird über die beiden Schwingungs-Sensoren 14, 16 unter anderem eine Phasenverschiebung der Schwingungen der Messrohre A, B entlang der Erstreckungsrichtung der beiden Messrohre A, B erfasst. Aus der erfassten Phasenverschiebung kann dann in der Elektronik 18 der Massedurchfluss ermittelt werden. Das Durchflussmessgerät 2 ist derart ausgebildet, dass durch dieses auch eine Dichte sowie eine Viskosität des strömenden Mediums bestimmbar sind.

Je nach Medium und je nach Prozessbedingungen sind insbesondere die Messrohre A, B im Hinblick auf eine Belagsbildung und/oder Abrasion gefährdet. Für die Durchführung einer Belags- und/oder Abrasionsdetektion sind an dem ersten Messrohr A und an dem zweiten Messrohr B jeweils ein Temperatursensor 30, 32 vorgesehen. Die Temperatursensoren 30, 32 sind jeweils außenseitig an dem betreffenden Messrohr A, B angebracht, so dass diese thermisch über die Messrohrwand des jeweiligen Messrohres A, B an das, in dem jeweiligen Messrohr A, B geführte Medium angekoppelt sind. Die Messrohrwand der Messrohre A, B kontaktiert im Einsatz jeweils innenseitig das Medium. Die Temperatursensoren 30, 32 bilden jeweils erste Temperatursensoren im Sinne der allgemeinen Beschreibung des erfindungsgemäßen Verfahrens. Durch die Temperatursensoren 30, 32 ist jeweils ein erster, zeitlicher Temperaturverlauf erfassbar. Dabei werden an die Elektronik 18 entsprechende Sensorsignale bereitgestellt, was in Fig. 2 durch entsprechende Pfeile 34, 36 dargestellt ist. Ferner ist ein Temperatursensor 38 außenseitig an dem einlassseitigen Strömungsteiler 4 des Durchflussmessgerätes 2 vorgesehen. Er ist thermisch über die Wand des Strömungsteilers 4 an das (im Einsatz) innerhalb des Strömungsteilers 4 geführte Medium angekoppelt. Der Temperatursensor 38 bildet in Bezug auf die beiden, an den Messrohren A, B angeordneten, ersten Temperatursensoren 30, 32 jeweils einen zweiten Temperatursensor im Sinne der allgemeinen Beschreibung des erfindungsgemäßen Verfahrens. Durch den zweiten Temperatursensor 38 ist ein zweiter, zeitlicher Referenz-Temperaturverlauf zeitlich parallel zu der Erfassung eines ersten, zeitlichen Temperaturverlaufs durch mindestens einen der beiden Temperatursensoren 30, 32 erfassbar. Dabei werden durch den zweiten Temperatursensor 38 entsprechende Sensorsignale an die Elektronik 18 bereitgestellt, was in Fig. 2 durch einen entsprechenden Pfeil 40 dargestellt ist.

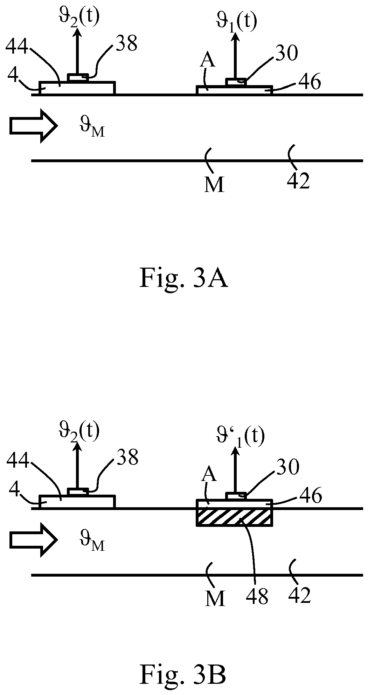

Der Strömungsteiler 4 weist im Bereich des zweiten Temperatursensors 38 einen größeren Strömungsquerschnitt und einen weitgehend geradlinig verlaufenden Strömungspfad für das Medium auf. Dadurch ist der Strömungsteiler 4 zumindest in diesem Bereich deutlich weniger anfällig bezüglich einer Belagsbildung und einer Abrasion als die Messrohre A, B. Die Temperaturmessung durch den zweiten Temperatursensor 38 bildet dementsprechend eine im Wesentlichen invariante Referenz gegenüber der Temperaturmessung im Bereich der ersten Temperatursensoren 30, 32. Nachfolgend wird davon ausgegangen, dass durch das Durchflussmessgerät 2 ein zur Belagsbildung neigendes Medium strömt. Es wird im Folgenden eine erfindungsgemäße Belagsdetektion an dem ersten Messrohr A (unter Einsatz des, an diesem ersten Messrohr A vorgesehenen, ersten Temperatursensors 30) erläutert, wobei im Rahmen dieser Erläuterung zusätzlich auf die Figuren 3A und 3B Bezug genommen wird. Das erfindungsgemäße Verfahren ist, wie für den Fachmann leicht ersichtlich ist, in entsprechender Weise auch zur Belags- und/oder Abrasionsdetektion an dem zweiten Messrohr B (unter Einsatz des, an diesem zweiten Messrohr B vorgesehenen Temperatursensors 32) durchführbar.

Es wird von einer Konstellation ausgegangen, dass das Durchflussmessgerät 2 zunächst von einem Medium mit einer Temperatur im Bereich der Raumtemperatur durchströmt wurde. Im Rahmen eines Reinigungsvorganges der Rohrleitungen (cip: engl.: cleaning in process; deutsch: Reinigen im Prozess), in denen das Durchflussmessgerät 2 eingesetzt ist, wird ein Mediumswechsel durchgeführt wird und das Durchflussmessgerät 2 wird von heißem Dampf (Temperatur: 100°C) durchströmt. Dabei kann beispielsweise vorgesehen sein, dass die Elektronik 18 des Durchflussmessgerätes 2 über diesen Mediumswechsel über eine Feldbus-Kommunikation informiert wird oder dass die auftretende Temperaturänderung des Mediums durch einen, in direktem Kontakt mit dem Medium stehenden (nicht dargestellten) Temperatursensor des Durchflussmessgerätes 2 erfasst wird. Es wird nun die Temperaturanpassung im Bereich des ersten Messrohres A durch den ersten Temperatursensor 30 erfasst, indem dieser einen ersten, zeitlichen Temperaturverlauf erfasst. Ferner wird als Referenz die Temperaturanpassung im Bereich des einlassseitigen Strömungsteilers 4 durch den zweiten Temperatursensor 38 erfasst, indem dieser einen zweiten, zeitlichen Referenz-Temperaturverlauf erfasst.

In Fig. 3A und 3B sind die Einflussfaktoren auf die Temperaturanpassung im Bereich des ersten Temperatursensors 30 und im Bereich des zweiten Temperatursensors 38 schematisch dargestellt. Dabei ist in Fig. 3A ein Ausgangszustand des Durchflussmessgerätes 2 dargestellt, in dem noch keine Belagsbildung innerhalb der Messrohre A, B aufgetreten ist. In Fig. 3B hingegen ist ein Zustand dargestellt, in dem zumindest in dem Messrohr A eine Belagsbildung aufgetreten ist. In den Figuren 3A und 3B ist jeweils der Strömungspfad 42 des jeweiligen Mediums M durch das Durchflussmessgerät 2, wobei nur der durch das erste Messrohr A verlaufende Teil gezeigt ist, schematisch dargestellt. Der zweite Temperatursensor 38, der stromaufwärts von dem ersten Temperatursensor 30 positioniert ist, ist thermisch über die Wand 44 des einlassseitigen Strömungsteilers 4 an das Medium M angekoppelt. Wie oberhalb erläutert wird, ist diese thermische Ankopplung im Wesentlichen zeitlich invariant. Der erste Temperatursensor 30 ist bei dem, in Fig. 3A dargestellten Ausgangszustand ausschließlich über die Messrohrwand 46 des ersten Messrohres A thermisch an das Medium M angekoppelt. In dem in Fig. 3B dargestellten Zustand hingegen erfolgt die thermische Ankopplung des ersten Temperatursensors 30 zusätzlich noch über den Belag 48, der innenseitig an der Messrohrwand 46 ausgebildet ist. Dadurch wird die Temperaturanpassung im Bereich des ersten Temperatursensors 30 beeinflusst.

Tritt folglich bei der oberhalb geschilderten Situation eine Temperaturänderung des Mediums M derart auf, dass dieses nun eine Temperatur $\vartheta_M$ von 100°C aufweist, so stellt sich sowohl im Bereich des ersten Temperatursensors 30 als auch im Bereich des zweiten Temperatursensors 38 eine geänderte Temperatur ein. Um diese Temperaturanpassung zu erfassen, wird durch den ersten Temperatursensor 30 ein erster, zeitlicher Temperaturverlauf ($\vartheta_1(t)$ in Fig. 3A, $\vartheta_1'(t)$ in Fig. 3B) sowie zeitlich parallel durch den zweiten Temperatursensor 38 ein zweiter, zeitlicher Referenz-Temperaturverlauf ($\vartheta_2(t)$ in Fig. 3A und 3B) erfasst. Liegen bei dem Zustand in Fig. 3B die gleichen Bedingungen (abgesehen von dem vorhandenen Belag 48) vor wie bei dem Ausgangszustand in Fig. 3A, so wird durch den zweiten Temperatursensor 38 bei beiden Zuständen der gleiche, zweite, zeitliche Referenz-Temperaturverlauf $\vartheta_2(t)$ gemessen. Demgegenüber wird bei dem in Fig. 3B dargestellten Zustand durch den ersten Temperatursensor 30 ein abweichender, erster, zeitlicher Referenz-Temperaturverlauf $\vartheta_1'(t)$ gemessen als der erste, zeitliche Temperaturverlauf $\vartheta_1(t)$ bei dem Ausgangszustand. Es wird hierbei angemerkt, dass für die Durchführung des erfindungsgemäßen Detektionsverfahrens nicht zwingend erforderlich ist, dass jeweils die gleichen Bedingungen wie bei einer zuvor durchgeführten Kalibrierungsmessung vorliegen. Allgemein kann eine Veränderung der Temperaturanpassung im Bereich des ersten Temperatursensors 30 (bzw. im Bereich des ersten Messrohres A) durch Auswertung des ersten, zeitlichen Temperaturverlaufs und des zweiten, zeitlichen Referenz-Temperaturverlaufs bestimmt werden. Hierbei sind grundsätzlich verschiedene Auswerteverfahren des ersten, zeitlichen Temperaturverlaufs und des zweiten, zeitlichen Referenz-Temperaturverlaufs möglich, wie oberhalb in dem allgemeinen Teil der Beschreibung erläutert wurde. Das jeweils anzuwendende Auswerteverfahren ist dabei in der Elektronik 18 des Durchflussmessgerätes 2 implementiert.

Gemäß einer Ausführungsvariante, die nachfolgend in Bezug auf den Zustand der Fig. 3B erläutert wird, wird der erste, zeitliche Temperaturverlauf $\vartheta_1'(t)$ durch den zweiten, zeitlichen Referenz-Temperaturverlauf $\vartheta_2(t)$ dividiert. Der daraus erhaltene Verlauf wird mit einer Approximations-Funktion, die vorliegend durch die Funktion $ae^{-\frac{t}{\tau}}$ gebildet wird, approximiert, wobei t die Zeit ist und a (Verstärkungsfaktor) und $\tau$ (Zeitkonstante) entsprechend anzupassende Parameter der Funktion sind. Als für die Wärmeübertragung charakteristische Größe wird der Wert der Zeitkonstante $\tau$ verwendet. Die-

ser wird mit einer vorbestimmten Referenzgröße, die im Voraus im Rahmen einer Kalibrierungsmessung ermittelt wurde, verglichen. Weicht diese um mehr als einen Grenzwert von der vorbestimmten Referenzgröße ab, so wird eine Belagsbildung durch das Durchflussmessgerät detektiert. Eine Signalisierung einer Belagsbildung (oder ggf. einer Abrasion) an einen Benutzer kann dabei insbesondere durch ein akustisches und/oder visuelles Signal erfolgen. Zusätzlich oder alternativ kann auch vorgesehen sein, dass eine entsprechende Nachricht durch das Durchflussmessgerät 2 elektronisch (z.B. über einen Feldbus) versendet wird, um so eine übergeordnete Einheit zu informieren.

Die vorliegende Erfindung ist nicht auf die, unter Bezugnahme auf die Figuren erläuterte Ausführungsform beschränkt. Insbesondere bestehen verschiedene Möglichkeiten für die Positionierung des zweiten Temperatursensors, durch welchen der zweite, zeitliche Referenz-Temperaturverlauf gemessen wird. Beispielsweise kann der zweite Temperatursensor auch an dem zweiten Messrohr B vorgesehen sein (vgl. Temperatursensor 32 in Fig. 1), und den zweiten, zeitlichen Referenz-Temperaturverlauf zur Durchführung einer Belagsdetektion an dem ersten Messrohr A bereitstellen. Weiterhin können allgemein in die Auswertung zur Bestimmung der, für die Wärmeübertragung von dem Medium über die Messrohrwand auf den ersten Temperatursensor charakteristischen Größe auch noch weitere Größen, die insbesondere einen Einfluss auf die Temperaturanpassung im Bereich des ersten und des zweiten Temperatursensors haben, mit eingehen. Solche Größen können insbesondere durch Eigenschaften des Mediums, wie beispielsweise durch eine Strömungsgeschwindigkeit des Mediums, eine Wärmekapazität des Mediums, eine Enthalpie des Mediums und/oder durch eine Wärmeleitung des Mediums, etc., gebildet werden.

## Patentansprüche

1.  Verfahren zum Detektieren einer Belagsbildung oder einer Abrasion an einem ersten Messrohr (A) eines von Medium durchströmten Durchflussmessgerätes (2), das die nachfolgenden Schritte umfasst:

    A) Erfassen eines ersten, zeitlichen Temperaturverlaufs durch einen ersten Temperatursensor (30), der an dem ersten Messrohr (A) derart angeordnet ist, dass zwischen dem ersten Temperatursensor (30) und dem Medium (M) zumindest eine Messrohrwand (46) des ersten Messrohres (A) ausgebildet ist, und zeitlich paralleles Erfassen eines zweiten, zeitlichen Referenz-Temperaturverlaufs durch einen zweiten, von dem ersten Temperatursensor beabstandeten Temperatursensor (38), der thermisch an das Medium (M) angekoppelt ist, wobei zwischen dem zweiten Temperatursensor (38) und dem Medium (M) zumindest ein von dem Medium (M) kontaktiertes, insb. vom ersten Messrohr separates, zweites Bauteil (4) vorgesehen ist, das ein, insb. durch einen einlassseitigen Strömungsteiler gebildetes, Bauteil des Durchflussmessgerätes ist;

    B) Bestimmen mindestens einer, für die Wärmeübertragung von dem Medium (M) über die Messrohrwand (46) auf den ersten Temperatursensor (30) charakteristischen Größe aus zumindest dem ersten, zeitlichen Temperaturverlauf und dem zweiten, zeitlichen Referenz-Temperaturverlauf; und

    C) Detektieren einer Belagsbildung oder einer Abrasion an dem ersten Messrohr (A), falls die mindestens eine, bestimmte, charakteristische Größe oder eine daraus abgeleitete Größe um mehr als einen Grenzwert von einer vorbestimmten Referenzgröße abweicht;

    wobei die Schritte des Erfassens (Schritt A), des Bestimmens (Schritt B) und des Detektierens (Schritt C) bei Auftreten einer, insb. kontinuierlichen oder sprunghaften, Temperaturänderung des Mediums durchgeführt werden, welche Temperaturänderung nicht vom Durchflussmessgerät (2) aus induziert wird.

2.  Verfahren gemäß Anspruch 1, **dadurch gekennzeichnet,**

    - **daß** die Schritte des Erfassens (Schritt A), des Bestimmens (Schritt B) und des Detektierens (Schritt C) unmittelbar oder zeitlich nach Auftreten der Temperaturänderung des Mediums durchgeführt werden; und/oder
    - **daß** eine Elektronik (18) des Durchflussmessgerätes (2) über einen im Rahmen eines Reinigungsvorganges (CIP) durchgeführten Mediumswechsel über eine Feldbus-Kommunikation informiert wird; und/oder
    - **daß** die Temperaturänderung durch einen Mediumswechsel und/oder ein Reinigungsmedium bewirkt wird.

3.  Verfahren gemäß einem der vorherigen Ansprüche, **dadurch gekennzeichnet, dass** das zweite Bauteil durch ein zweites Messrohr (B) des Durchflussmessgerätes (2), das fluidtechnisch parallel zu dem ersten Messrohr (A) ausgebildet ist, gebildet wird.

4.  Verfahren gemäß einem der vorangehenden Ansprüche, **dadurch gekennzeichnet, dass** das Durchflussmessgerät (2) durch ein Coriolis-Durchflussmessgerät gebildet wird und dass das Verfahren nachfolgenden Schritt aufweist:
    D) Anregen des ersten Messrohres (A) zu mechanischen Schwingungen.

**5.** Verfahren gemäß einem der vorangehenden Ansprüche, **gekennzeichnet durch** nachfolgenden Schritt:
E) Ändern einer Temperatur des Mediums (M), insbesondere durch Heizen des Mediums (M) in einem stromaufwärts von dem ersten (30) und dem zweiten (38) Temperatursensor angeordneten Abschnitt des Durchflussmessgerätes (2) oder durch Kühlen des Mediums (M) in einem stromaufwärts von dem ersten (30) und dem zweiten (38) Temperatursensor angeordneten Abschnitt des Durchflussmessgerätes (2).

**6.** Verfahren gemäß einem der vorangehenden Ansprüche, **dadurch gekennzeichnet, dass** die mindestens eine, für die Wärmeübertragung charakteristische Größe aus der Ableitung nach der Zeit des ersten, zeitlichen Temperaturverlaufs und des zweiten, zeitlichen Referenz-Temperaturverlaufs und/oder aus der Ableitung nach der Zeit eines durch eine vorbestimmte, mathematische Verknüpfung des ersten, zeitlichen Temperaturverlaufs und des zweiten, zeitlichen Referenz-Temperaturverlaufs erhaltenen Verlaufs bestimmt wird.

**7.** Verfahren gemäß einem der Ansprüche 1 bis 5, **dadurch gekennzeichnet, dass** bei dem Schritt des Bestimmens der erste, zeitliche Temperaturverlauf und der zweite, zeitliche Referenz-Temperaturverlauf miteinander gemäß einer vorbestimmten, mathematischen Verknüpfung verknüpft werden, der daraus erhaltene Verlauf mit einer vorbestimmten, mathematischen Approximations-Funktion durch Anpassen entsprechender Parameter der Approximations-Funktion approximiert wird und die mindestens eine, für die Wärmeübertragung charakteristische Größe durch mindestens einen Parameterwert der ermittelten Approximations-Funktion gebildet wird.

**8.** Verfahren gemäß Anspruch 7, **dadurch gekennzeichnet, dass** die vorbestimmte, mathematische Verknüpfung durch eine Division des ersten, zeitlichen Temperaturverlaufs durch den zweiten, zeitlichen Referenz-Temperaturverlauf gebildet wird.

**9.** Verfahren gemäß Anspruch 7 oder 8, **dadurch gekennzeichnet, dass** die vorbestimmte, mathematische Approximations-Funktion durch die Funktion $ae^{-\frac{t}{\tau}}$ gebildet wird, wobei a und $\tau$ Parameter sind und t die Zeit ist.

**10.** Verfahren gemäß einem der Ansprüche 7 bis 9, **dadurch gekennzeichnet, dass** die mindestens eine, bestimmte, für die Wärmeübertragung charakteristische Größe durch den Parameterwert der Zeitkonstante der Approximations-Funktion gebildet wird.

**11.** Verfahren gemäß einem der vorherigen Ansprüche, wobei das zweite Bauteil (4) durch einen einlassseitigen Strömungsteiler gebildet ist.

**12.** Durchflussmessgerät, durch das mindestens eine physikalische Messgröße eines in einer Rohrleitung strömenden Mediums, insbesondere ein Massedurchfluss, eine Dichte und/oder eine Viskosität des Mediums (M), bestimmbar ist, wobei das Durchflussmessgerät (2) eingerichtet ist, ein Verfahren gemäß einem der vorherigen Ansprüche auszuführen, und wobei das Durchflussmessgerät (2) aufweist:

- das erste Messrohr (A),
- mindestens den ersten Temperatursensor (30),
- mindestens den zweiten Temperatursensor (38) und
- eine Elektronik (18),
- wobei durch das erste Messrohr (A) ein Strömungspfad (42) für zumindest einen Teil des jeweiligen Mediums (M) verläuft,
- und wobei durch die Elektronik (18) im Einsatz des Durchflussmessgerätes (2) aus zumindest einem von dem ersten Temperatursensor (30) erfassten, ersten, zeitlichen Temperaturverlauf und einem zeitlich parallel von dem zweiten Temperatursensor (38) erfassten, zweiten, zeitlichen Referenz-Temperaturverlauf mindestens eine, für die Wärmeübertragung von dem jeweiligen Medium (M) über die Messrohrwand (46) auf den ersten Temperatursensor (30) charakteristische Größe bestimmbar ist und eine Belagsbildung oder eine Abrasion an dem ersten Messrohr (A) detektierbar ist, falls die mindestens eine, bestimmte, charakteristische Größe oder eine daraus abgeleitete Größe um mehr als einen Grenzwert von einer vorbestimmten Referenzgröße abweicht.

**13.** Durchflussmessgerät gemäß dem vorherigen Anspruch, wobei das zweite Bauteil durch einen einlassseitigen Strömungsteiler gebildet ist.

## Claims

**1.** A method for detecting deposits or abrasion on a first measuring tube (A) of a flowmeter (2) through which medium flows, comprising the following steps:

A) Recording a first time-based temperature curve by a first temperature sensor (30) which is arranged on the first measuring tube (A) in such a way that at least one measuring tube wall (46) of the first measuring tube (A) is formed between the first temperature sensor (30) and the medium (M), and simultaneous recording of a second time-based reference temperature curve by a second temperature sensor (38) at a distance from the first temperature sensor, said second temperature sensor being thermally coupled to the medium (M), wherein at least one second component (4) contacted by the medium (M), in particular a component that is separate from the first measuring tube, is provided between the second temperature sensor (38) and the medium (M), said second component is in particular a component of the flowmeter formed by an inlet-side flow divider;
B) Determining at least one characteristic variable for the heat transfer from the medium (M) to the first temperature sensor (30) via the measuring tube wall (46) based on at least the first time-based temperature curve and the second time-based reference temperature curve; and
C) Detecting deposits or abrasion on the first measuring tube (A), if the at least one, defined, characteristic variable or a variable derived therefrom deviates from a predefined reference variable by more than a limit value;

wherein the steps of recording (step A), determining (step B), and detecting (step C) are performed in the event of a temperature change of the medium, in particular a continuous or sudden one, said temperature change not being induced by the flowmeter (2).

2. The method as claimed in claim 1, **characterized in that**

   - the steps of recording (step A), determining (step B), and detecting (step C) are performed as soon as the temperature change of the medium occurs or afterward; and/or
   - electronics (18) of the flowmeter (2) are informed of a medium change carried out during a cleaning process (CIP) via fieldbus communication; and/or
   - the temperature change is effected by a change of medium and/or a cleaning medium.

3. The method as claimed in one of the preceding claims, **characterized in that** the second component is formed by a second measuring tube (B) of the flowmeter (2) which is arranged fluidically parallel to the first measuring tube (A).

4. The method as claimed in one of the preceding claims, **characterized in that** the flowmeter (2) is formed by a Coriolis flowmeter, and **in that** the method includes the following step:
D) Causing the first measuring tube (A) to mechanically vibrate.

5. The method as claimed in one of the preceding claims, **characterized by** the following step:
E) Changing a temperature of the medium (M), in particular by heating the medium (M) in an area of the flowmeter (2) arranged upstream of the first (30) and the second (38) temperature sensors or by cooling the medium (M) in an area of the flowmeter (2) arranged upstream of the first (30) and the second (38) temperature sensors.

6. The method as claimed in one of the preceding claims, **characterized in that** the at least one characteristic variable for the heat transfer is determined based on the time derivative of the first time-based temperature curve and of the second time-based reference temperature curve and/or based on the time derivative of a curve obtained by a predefined mathematical operation involving the first time-based temperature curve and the second time-based reference temperature curve.

7. The method as claimed in one of claims 1 to 5, **characterized in that**, during the determining step, the first time-based temperature curve and the second time-based reference temperature curve are linked with one another according to a predefined mathematical operation, and **in that** the resulting curve is approximated by means of a predefined mathematical approximation function by adapting relevant parameters of the approximation function, and **in that** the at least one characteristic variable for the heat transfer is formed by at least one parameter value of the determined approximation function.

8. The method as claimed in claim 7, **characterized in that** the predefined mathematical operation is formed by dividing the first time-based temperature curve by the second time-based reference temperature curve.

9. The method as claimed in claim 7 or 8, **characterized in that** the predefined mathematical approximation function is formed by the function

$$ae^{\frac{t}{T}},$$

wherein a and T are parameters and t is the time.

10. The method as claimed in one of claims 7 to 9, **characterized in that** the at least one, defined, characteristic variable for the heat transfer is formed by the parameter value of the time constant of the approximation function.

11. The method as claimed in one of the preceding claims, wherein the second component (4) is formed by an inlet-side flow divider.

12. A flowmeter which can be used to determine at least one physical measured variable of a medium flowing in a pipeline, in particular a mass flow, a density, and/or a viscosity of the medium (M), wherein the flowmeter (2) is configured to carry out a method as claimed in one of the preceding claims, and wherein the flowmeter (2) comprises:

- The first measuring tube (A),
- at least the first temperature sensor (30),
- at least the second temperature sensor (38), and
- electronics (18),
- wherein a flow path (42) for at least one part of the respective medium (M) flows through the first measuring tube (A),
- and wherein the electronics (18) used in the flowmeter (2) are able to determine at least one characteristic variable for the heat transfer from the respective medium (M) to the first temperature sensor (30) via the measuring tube wall (46) based on at least one first time-based temperature curve recorded by the first temperature sensor (30) and a second time-based reference temperature curve recorded simultaneously by the second temperature sensor (38), and are able to detect deposits or abrasion on the first measuring tube (A) if the at least one, defined, characteristic variable or a variable derived therefrom deviates from a predefined reference variable by more than a limit value.

13. The flowmeter as claimed in the preceding claim, wherein the second component is formed by an inlet-side flow divider.

## Revendications

1. Procédé destiné à la détection d'une formation d'un dépôt ou d'une abrasion sur un premier tube de mesure (A) d'un débitmètre (2) traversé par un produit, lequel procédé comprend les étapes suivantes :

A) Acquisition d'une première évolution temporelle de la température par un premier capteur de température (30), lequel est disposé sur le premier tube de mesure (A) de telle sorte qu'au moins une paroi de tube de mesure (46) du premier tube de mesure (A) est formée entre le premier capteur de température (30) et le produit (M), et acquisition en parallèle dans le temps d'une deuxième évolution temporelle de référence de la température par un deuxième capteur de température (38), lequel deuxième capteur est distant du premier capteur de température et lequel deuxième capteur est couplé thermiquement au produit (M), au moins un deuxième composant (4) étant prévu entre le deuxième capteur de température (38) et le produit (M), lequel composant est en contact avec le produit (M) et lequel composant est notamment séparé du premier tube de mesure, lequel composant est un élément du débitmètre, lequel élément est notamment formé par un diviseur de débit côté entrée ;

B) Détermination d'au moins une grandeur caractéristique pour le transfert thermique du produit (M) par l'intermédiaire de la paroi de tube de mesure (46) au premier capteur de température (30) à partir d'au moins la première évolution temporelle de la température et de la deuxième évolution temporelle de référence de la température ; et

C) Détection d'une formation de dépôt ou d'une abrasion sur le premier tube de mesure (A) au cas où l'au moins une grandeur caractéristique déterminée ou une grandeur qui en est dérivée s'écarte de plus d'une valeur limite d'une grandeur de référence prédéterminée ;

les étapes d'acquisition (étape A), de détermination (étape B) et de détection (étape C) étant effectuées lors de l'apparition d'une variation de température, notamment continue ou brusque, du produit, laquelle variation de température n'est pas induite par le débitmètre (2).

2. Procédé selon la revendication 1, **caractérisé**

- **en ce que** les étapes d'acquisition (étape A), de détermination (étape B) et de détection (étape C) sont effectuées immédiatement ou après l'apparition du changement de température du produit ; et/ou
- **en ce qu'**une électronique (18) du débitmètre (2) est informée d'un changement de produit effectué dans le cadre d'une opération de nettoyage (CIP) via une communication de bus de terrain ; et/ou
- **en ce que** le changement de température est provoqué par un changement de produit et/ou un produit de nettoyage.

3. Procédé selon l'une des revendications précédentes, **caractérisé en ce que** le deuxième composant est formé par un deuxième tube de mesure (B) du débitmètre (2), lequel deuxième tube de mesure est réalisé en parallèle avec le premier tube de mesure (A) du point de vue de la technique des fluides.

4. Procédé selon l'une des revendications précédentes, **caractérisé en ce que** le débitmètre (2) est constitué d'un débitmètre Coriolis et **en ce que** le procédé comprend l'étape suivante :
D) Excitation du premier tube de mesure (A) en vibrations mécaniques.

5. Procédé selon l'une des revendications précédentes, **caractérisé par** l'étape suivante :
E) Modification d'une température du produit (M), notamment en chauffant le produit (M) dans une partie du débitmètre (2) située en amont du premier (30) et du deuxième (38) capteur de température ou en refroidissant le produit (M) dans une partie du débitmètre (2) située en amont du premier (30) et du deuxième (38) capteur de température.

6. Procédé selon l'une des revendications précédentes, **caractérisé en ce que** l'au moins une grandeur caractéristique du transfert thermique est déterminée à partir de la dérivée par rapport au temps de la première évolution temporelle de la température et de la deuxième évolution temporelle de référence de la température et/ou à partir de la dérivée par rapport au temps d'une courbe obtenue par une combinaison mathématique prédéterminée de la première évolution temporelle de la température et de la deuxième évolution temporelle de référence de la température.

7. Procédé selon l'une des revendications 1 à 5, **caractérisé en ce que** lors de l'étape de détermination, la première évolution temporelle de la température et la deuxième évolution temporelle de référence de la température sont combinées l'une à l'autre selon une combinaison mathématique prédéterminée, la courbe obtenue est approximée par une fonction d'approximation mathématique prédéterminée en adaptant des paramètres correspondants de la fonction d'approximation et l'au moins une grandeur caractéristique du transfert thermique est formée par au moins une valeur de paramètre de la fonction d'approximation déterminée.

8. Procédé selon la revendication 7, **caractérisé en ce que** la relation mathématique prédéterminée est formée par une division de la première évolution temporelle de la température par la deuxième évolution temporelle de référence de la température.

9. Procédé selon la revendication 7 ou 8, **caractérisé en ce que** la fonction d'approximation mathématique prédéterminée est formée par la fonction $ae^{-\frac{t}{\tau}}$ , où a et $\tau$ sont des paramètres et t est le temps.

10. Procédé selon l'une des revendications 7 à 9, **caractérisé en ce que** l'au moins une grandeur déterminée, caractéristique du transfert thermique, est formée par la valeur du paramètre de la constante de temps de la fonction d'approximation.

11. Procédé selon l'une des revendications précédentes, pour lequel le deuxième composant (4) est formé par un diviseur de débit côté entrée.

12. Débitmètre, au moyen duquel au moins une grandeur de mesure physique d'un produit s'écoulant dans une conduite, notamment un débit massique, une densité et/ou une viscosité du produit (M), peut être déterminée, le débitmètre (2) étant conçu pour exécuter un procédé selon l'une des revendications précédentes, et le débitmètre (2) présentant :

   - le premier tube de mesure (A),
   - au moins le premier capteur de température (30),
   - au moins le deuxième capteur de température (38) et
   - une électronique (18),
   - un chemin d'écoulement (42) pour au moins une partie du produit (M) respectif s'étendant à travers le premier tube de mesure (A), et
   - l'électronique (18) permettant, lors de l'utilisation du débitmètre (2), de déterminer - à partir d'au moins une première évolution temporelle de la température, mesurée par le premier capteur de température (30), et d'une deuxième évolution temporelle de référence de la température, mesurée parallèlement dans le temps par le deuxième capteur de température (38) - une grandeur caractéristique du transfert thermique du produit (M) respectif par l'intermédiaire de la paroi de tube de mesure (46) au premier capteur de température (30), et de détecter une formation de dépôt ou une abrasion sur le premier tube de mesure (A) au cas où l'au moins une grandeur caractéristique déterminée, ou une grandeur qui en est dérivée, s'écarte de plus d'une valeur limite d'une grandeur de référence prédéterminée.

13. Débitmètre selon la revendication précédente, pour lequel le deuxième composant est formé par un diviseur de débit côté entrée.

Fig. 1

Fig. 2

EP 2 739 944 B1

Fig. 3A

Fig. 3B

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2009134268 A1